# FASCICULE DE BREVET EUROPEEN

(11) **EP 2 297 927 B1**
(45) Date de publication et mention de la délivrance du brevet: **08.02.2012**
(21) Numéro de dépôt: 09794019.1
(22) Date de dépôt: 16.06.2009
(51) Int. Cl.: H04L 29/12

(54) **PROCEDE DE RECEPTION D'UN PAQUET DE DONNEES EN PROVENANCE D'UN DOMAINE IPV4 DANS UN DOMAINE IPV6, DISPOSITIF ET EQUIPEMENT D'ACCES ASSOCIES**
VERFAHREN FÜR DEN EMPFANG EINES DATENPAKETS VON EINER IPV4-DOMÄNE IN EINER IPV6-DOMÄNE SOWIE ZUGEHÖRIGE VORRICHTUNG UND ZUGANGSANLAGE
METHOD FOR RECEIVING A DATA PACKET FROM AN IPV4 DOMAIN IN AN IPV6 DOMAIN, AND ASSOCIATED DEVICE AND ACCESS EQUIPMENT

(30) Priorité: 30.06.2008 FR 0854398
(43) Date de publication de la demande: 23.03.2011
(73) Titulaire: France Telecom, 75015 Paris (FR)
(72) Inventeur: BOUCADAIR, Mohamed, F-35000 Rennes (FR); GRIMAULT, Jean-Luc, F-14120 Mondeville (FR)
(86) Numéro de dépôt international: PCT/FR2009/051148
(87) Numéro de publication internationale: WO 2010/004156

(56) Documents cités:
- EP-A- 1 420 559
- WO-A-2004/039014
- WO-A-2007/099248
- MYUNG-KI SHIN ET AL: "Ports option support in dual stack transition mechanism (DSTM)" ADVANCED COMMUNICATION TECHNOLOGY, 2004. THE 6TH INTERNATIONAL CONFERE NCE ON PHOENIX PARK, KOREA FEB. 9-11, 2004, PISCATAWAY, NJ, USA,IEEE, vol. 1, 9 février 2004 (2004-02-09), pages 225-228, XP010701165 ISBN: 978-89-5519-119-6
- AFIFI H ET AL: "Methods for IPv4-IPv6 transition" COMPUTERS AND COMMUNICATIONS, 1999. PROCEEDINGS. IEEE INTERNATIONAL SY MPOSIUM ON RED SEA, EGYPT 6-8 JULY 1999, LOS ALAMITOS, CA, USA,IEEE COMPUT. SOC, US, 6 juillet 1999 (1999-07-06), pages 478-484, XP010555073 ISBN: 978-0-7695-0250-2
- CARPENTER B ET AL: "RFC 3056. Connection of IPv6 Domains via IPv4 Clouds" NETWORK WORKING GROUP REQUEST FOR COMMENTS, 1 février 2001 (2001-02-01), XP002240357
- DANIEL PARK ET AL: "Network Address Translation - Protocol Translation (NAT-PT); draft-daniel-natpt-bis-01.txt" INTERNET ENGINEERING TASK FORCE, IETF, 22 octobre 2005 (2005-10-22), XP015042124

## Description

### 1. Domaine de l'invention

Le domaine de l'invention est celui d'un réseau de télécommunications, en particulier un réseau de télécommunications IP dans lequel sont transportés des paquets de données d'un équipement source identifié par une adresse source vers un équipement de destination identifié par une adresse de destination.

Un tel réseau de télécommunications regroupe une pluralité d'équipements, de liens et de fonctions dédiés au transport des données issues d'équipements terminaux connectés à ce réseau. En particulier, les fonctions de transport peuvent être implémentées grâce à l'activation de protocoles de routage et de transmission. Un réseau de télécommunications administré par un opérateur est encore appelé un domaine.

Un fournisseur de service de connectivité IP déploie une architecture dédiée pour permettre aux utilisateurs d'équipements terminaux d'être joignables. L'accès au service de connectivité IP est géré par le fournisseur de service qui s'appuie sur le réseau de télécommunications d'un opérateur pour router les paquets de données émis par les équipements terminaux vers leurs destinations finales. Dans certains cas, ledit fournisseur de service est aussi l'opérateur de réseau de télécommunications.

Un tel fournisseur de service affecte une adresse IP, généralement publique à une passerelle résidentielle placée entre un réseau résidentiel et le réseau public, appelé encore domaine IP de l'opérateur. La passerelle résidentielle affecte généralement aux terminaux de son réseau résidentiel des adresses IP privées.

Dans la suite, on désignera par « passerelle résidentielle » tout équipement d'interconnexion entre un réseau privé et un réseau opéré par un fournisseur de service, le réseau privé pouvant aussi bien être un réseau résidentiel qu'un réseau d'entreprise.

Dans la suite, le réseau opéré par les fournisseurs de service sera aussi désigné par le terme "réseau public".

Placée en coupure des paquets de données entre un terminal de son réseau résidentiel privé et le domaine IP de l'opérateur, la passerelle résidentielle comporte, de façon connue, une table dans laquelle elle associe l'adresse IP privée et le port associé à ce terminal, avec une adresse IP publique de type IPv4 et un port de cette même passerelle sur le réseau public.

Cette table est connue de l'homme du métier sous l'appellation "table de nattage", cette expression venant de l'acronyme NAT (*Network Address Translator* en anglais). Plusieurs types de NAT peuvent être implémentés, notamment des tables de type « Full Cone », « Port Restricted » ou encore « symétrique ».

Il est communément admis par la communauté des fournisseurs de service IP que l'épuisement des adresses IPv4 publiques est une fatalité. Pour éviter ce problème, la communauté s'est mobilisée dans le passé, ce qui a conduit à la définition d'un nouveau protocole : IPv6 (*Internet Protocol version 6*). Cette nouvelle version du protocole IP offre un grand nombre d'adresses IP et un mécanisme de routage hiérarchique aux performances améliorées. Ces mêmes fournisseurs ne sont toutefois pas indifférents aux alarmes récemment émises par l'IETF (*Internet Engineering Task Force*), notamment dans des rapports présentés au sein du groupe de travail GROW (*Global Routing Operations Working Group*) concernant un risque d'épuisement des adresses IPv4 de l'IANA fin 2010.

Néanmoins, cette solution du protocole IPv6, n'est en pratique pas encore beaucoup activée par les opérateurs, pour des raisons financières, stratégiques et techniques liées à la gestion de la complexité des opérations de transition et de migration.

Pour limiter le nombre d'adresses publiques IPv4 nécessaires pour la fourniture d'un service de connectivité IP à un parc de clients, une solution de double NAT, appelée aussi « NAT Opérateur », a été proposée et implémentée. Elle consiste à activer une fonction NAT au sein du réseau de télécommunications de l'opérateur, de telle sorte que les passerelles résidentielles utilisent une adresse privée dans leurs tables de Nattage vers l'extérieur (au lieu d'une adresse publique). Ainsi, c'est la fonction « NAT Opérateur » qui assure la traduction des adresses privées des passerelles résidentielles vers des adresses publiques, ce qui permet à un fournisseur de service d'économiser un nombre non négligeable d'adresses publiques IPv4 requises pour la fourniture du service de connectivité IP.

### Inconvénients de la technique antérieure

La solution « NAT Opérateur » présente des inconvénients, parmi lesquels :
- une complexification du traitement des paquets de données IP : du fait de l'introduction d'un deuxième niveau de traduction d'adresses, les paquets de données doivent être modifiés deux fois ;
- la nécessité d'adapter la mise en oeuvre des protocoles de signalisation applicative ou ALG (*Application Level Gateway*) conventionnels tels que DNS (*Domain Name System*), FTP (*File Transfer Protocol*) ou encore SIP (*Session Initiation Protocol*). Dans le cas de SIP par exemple, l'établissement et le maintien d'une session de voix sur IP, nécessite que, pour maintenir à jour la table de Nattage d'une passerelle résidentielle, des échanges de signalisation fréquents entre le terminal de l'abonné et le réseau public via des requêtes de réenregistrements doivent être implémentés de façon à maintenir les sessions de NAT actives. En présence d'un double NAT, un tel mécanisme doit aussi être prévu au niveau de l'équipement qui héberge la fonction de NAT Opérateur. L'adresse et le port publics effectivement en cours d'usage pour le terminal doivent en outre être communiqués à l'application SIP;
- une dégradation du service de connectivité IP offert par l'opérateur du réseau public de télécommunications doit être déplorée, notamment parce que des fonctionnalités telles que le *"port forwarding"* ou le *DynDNS* ne peuvent pas être supportées en présence du « NAT Opérateur »;

Par ailleurs, une telle solution ne pourra pas empêcher, mais seulement retarder le phénomène d'épuisement des adresses IPv4. Il faudra donc prévoir à moyen terme un passage à IPv6. Un tel passage va nécessairement engendrer une période de transition pendant laquelle des domaines IPv6 devront s'interconnecter avec des domaines IPv4. Or, rien n'est prévu dans les réseaux actuels pour faciliter une telle interconnexion d'une manière efficace, optimale et sans instanciation d'états supplémentaires dans les noeuds réseaux mis en oeuvre dans la fourniture du service de connectivité IP.

### Exposé de l'invention

L'invention vient améliorer la situation à l'aide d'un procédé de réception d'un paquet de données en provenance d'un domaine IPv4 dans un domaine IPV6. un exemple d'un tel procédé est connu de Myung-Ki-Shin et al, "Ports option support in dual stack transition mechanism (DSTM); proceedings of the 6th International conference on advanced communication technology, 9-11 February 2004, page 225-226

Selon l'invention, ledit paquet de données comprend une adresse de destination IPv4, un numéro de port de destination et ledit procédé comprend les étapes suivantes :
- construction d'une adresse de destination IPv6 par concaténation d'un préfixe opérateur, de ladite adresse IPv4 et du numéro de port de destination,
- génération d'un paquet de données IPv6 à partir de l'adresse de destination IPv6 construite, et du paquet de données IPv4 reçu; et
- routage du paquet de données IPv6 généré à l'aide de l'adresse de destination IPv6 construite, ladite adresse ainsi construite appartenant à une plage d'adresses IPv6 routable vers un équipement d'interconnexion du domaine IPv6 avec l'adresse de destination IPv4.

Ainsi, l'invention repose sur une approche tout à fait nouvelle et inventive de l'acheminement d'un paquet de données en provenance d'un domaine IPv4 dans un domaine IPv6. En effet, lorsqu'un paquet de données IPv4 entre dans le domaine IPv6, l'invention permet de construire, au niveau d'un équipement d'accès au domaine IPv6, une adresse de destination IPv6 routable dans le domaine IPv6, à partir de l'adresse de destination IPv4 et du port de destination et de générer un paquet de données IPv6 comprenant l'adresse de destination ainsi construite. Cette adresse de destination IPv6 construite est routable dans le domaine IPv6 et comprend les informations utiles véhiculées par le paquet de données IPv4.

On comprend que l'invention nécessite que le terminal destinataire dispose d'une adresse IPv4, à partir de laquelle une adresse de destination IPv6 pourra être construite.

L'invention concerne également un procédé de transmission d'un paquet de données d'un domaine IPv6 vers une adresse de destination IPv4. Selon l'invention, le paquet comprend une adresse de destination IPv6 du paquet construite par concaténation d'un préfixe opérateur, de l'adresse de destination IPv4 et d'un numéro de port de destination et ledit procédé met en oeuvre, sur réception du paquet de données, les étapes suivantes :
- extraction de l'adresse de destination IPv4 et du numéro de port de l'adresse de destination IPv6,
- génération d'un paquet de données IPv4 à partir du paquet de données IPv6, ledit paquet comprenant ladite adresse de destination IPv4, ledit numéro de port de destination, et
- routage du paquet de données IPv4 vers sa destination IPv4.

Le paquet de données IPv6 est routé dans le domaine IPv6 jusqu'à un équipement d'interconnexion du domaine IPv6 avec un domaine IPv4. Le procédé selon l'invention permet de générer, à partir de ce paquet de données IPv6, un paquet de données IPv4 que le domaine IPv4 va pouvoir acheminer jusqu'à sa destination.

Avec le mécanisme de construction d'une adresse IPv6 à partir d'une adresse IPv4 selon l'invention, on peut retrouver l'adresse IPv4 à l'origine de l'adresse IPv6 construite. Il n'est donc pas nécessaire de stocker une table de traduction d'adresses IPv4 vers IPv6 ni de maintenir des états relatifs à des sessions au niveau d'un équipement d'interconnexion des deux domaines IPv4 et IPv6. L'invention permet donc d'acheminer un paquet de données IPv4 sous la forme d'un paquet de données IPv6 via un équipement d'interconnexion du domaine IPv6 avec un domaine IPv4 et d'acheminer le paquet vers sa destination finale en utilisant les informations utiles contenues dans le paquet reçu par ledit équipement d'interconnexion à son destinataire sans avoir recours à des tables d'états lourdes à maintenir.

Il en résulte que les procédés de réception et de transmission d'un paquet de données selon l'invention réalisent une interconnexion de domaines IPv4 et IPv6 qui est simple à mettre en oeuvre. En imposant l'utilisation du protocole IPv6 pour l'acheminement de données IPv4, ils favorisent en outre une migration progressive des domaines IPv4 vers le protocole IPv6.

On notera que la construction du paquet de données IPv6 à partir du paquet de données IPv4 peut consister en une encapsulation ou en une traduction de protocole. A l'inverse, la génération du paquet de données IPv4 à partir du paquet de données IPv6 peut être réalisée par une désencapsulation de paquet ou par une traduction de protocole, selon la méthode qui a été employée pour constituer le paquet de données IPv6 à partir du paquet de données IPv4 (encapsulation ou traduction de protocole).

Le procédé de réception d'un paquet de données selon l'invention est avantageusement mis en oeuvre par un dispositif de réception d'un paquet de données en provenance d'un domaine IPv4 dans un domaine IPv6, caractérisé en ce que, ledit paquet de données comprenant une adresse de destination IPv4 et un numéro de port de destination IPv4, ledit dispositif comprend les moyens suivants :
- construction d'une adresse de destination IPv6 par concaténation d'un préfixe opérateur, de ladite adresse IPv4 et du numéro de port de destination,
- génération d'un paquet de données IPv6 à partir de l'adresse de destination IPv6 construite et du paquet de données IPv4 reçu; et
- routage du paquet de données IPv6 généré dans le domaine IPv6, à l'aide de l'adresse de destination IPv6 construite, ladite adresse ainsi construite appartenant à une plage d'adresses IPv6 routable vers un équipement d'interconnexion du domaine IPv6 avec l'adresse de destination IPv4.

Le procédé de transmission d'un paquet de données selon l'invention est avantageusement mis en oeuvre par un dispositif de transmission d'un paquet de données d'un domaine IPv6 vers un domaine IPv4, caractérisé en ce ledit paquet comprenant une adresse de destination IPv6 du paquet construite par concaténation d'un préfixe opérateur, de l'adresse de destination IPv4 et d'un numéro de port de destination, ledit dispositif met en oeuvre, sur réception du paquet de données, les moyens suivants :
- extraction de l'adresse de destination IPv4 et du numéro de port de l'adresse de destination IPv6,
- génération d'un paquet de données IPv4 à partir du paquet de données IPv6, ledit paquet comprenant ladite adresse de destination IPv4 et ledit numéro de port de destination, et
- routage du paquet de données IPv4 vers sa destination IPv4.

L'invention concerne également un équipement d'accès à un domaine IPv6 comprenant une interface avec au moins un domaine IPv4. Selon l'invention, un tel équipement comprend :
- un dispositif de réception d'un paquet de données en provenance d'un domaine IPv4 dans le domaine IPv6 selon l'invention; et
- un dispositif de transmission d'un paquet de données d'un domaine IPv6 vers un domaine IPv4 selon l'invention.

Un tel équipement d'accès réalise donc une interconnexion entre le domaine IPv6 auquel il appartient et un domaine IPv4 voisin. Le domaine IPv4 voisin peut être un réseau public géré par un opérateur ou un réseau privé, qu'il soit résidentiel ou d'entreprises. On notera que cet équipement d'accès peut être un équipement réseau de tout type, pourvu qu'il dispose d'une interface réseau entre un domaine IPv6 et un domaine IPv4. Ce peut être notamment un terminal d'utilisateur tel qu'un ordinateur personnel.

Selon un aspect de l'invention, le domaine IPv4 est un réseau public et ledit équipement d'accès comprend des premiers moyens d'annonce au domaine IPv4 des adresses IPv4 d'équipements réseaux connectés au domaine IPv6 et des deuxièmes moyens d'annonce dans le domaine IPv6 d'adresses IPv6 construites à partir d'adresses IPv4 du domaine IPv4.

L'équipement d'accès est un noeud d'accès à un domaine IPv4 public. Les annonces qu'il diffuse indiquent aux autres équipements de son domaine et aux noeuds d'accès du domaine IPv4 que les paquets de données comprenant les adresses annoncées doivent lui être envoyés.

Selon un autre aspect de l'invention, le domaine IPv4 est un réseau privé et ledit équipement d'accès est une passerelle résidentielle apte à connecter des terminaux d'utilisateurs du réseau privé au domaine IPv6

On entend par réseau privé tout type de réseau résidentiel ou d'entreprises. Une passerelle résidentielle selon l'invention est nécessairement "dual stack", ce qui signifie qu'elle est apte à mettre en oeuvre à la fois le protocole IPv4 et le protocole IPv6. Selon l'invention, elle peut aussi bien recevoir de son réseau privé des paquets de données IPv4 et les router en IPv6 dans le domaine IPv6 que transmettre des paquets de données reçus du domaine IPv6 à un terminal de son réseau privé en IPv4.

Selon un autre aspect de l'invention, une telle passerelle résidentielle comprend des moyens d'obtention d'une adresse IPv4, d'une plage de numéros de ports autorisés et d'une plage d'adresses IPv6 autorisées, ladite plage d'adresses IPv6 étant construite par concaténation d'un préfixe opérateur, de ladite adresse IPv4 et de la plage de numéros de ports IPv4 autorisés;

Selon l'invention, la passerelle résidentielle dispose d'une plage d'adresses IPv6 qu'elle peut utiliser pour générer un paquet de données IPv6 à partir d'un paquet de données reçu d'un terminal d'utilisateur de son réseau privé. A l'inverse, elle reçoit du domaine IPv6 les paquets de données IPv6 comprenant une adresse de destination IPv6 construite appartenant à ladite plage d'adresses et elle route le paquet de données IPv4 qu'elle génère à partir du paquet IPv6 reçu, vers le terminal d'utilisateur correspondant au numéro de port de destination du paquet.

Dans un mode particulier de réalisation, les différentes étapes des procédés de réception et de transmission d'un paquet de données sont déterminées par des instructions de programmes d'ordinateurs.

En conséquence, l'invention vise aussi un programme d'ordinateur sur un support d'informations, ce programme étant susceptible d'être mis en oeuvre dans un dispositif d'acheminement, de réception ou de transmission ou plus généralement dans un ordinateur, ce programme comportant des instructions adaptées à la mise en oeuvre des étapes d'un procédé d'acheminement, de réception ou de transmission tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un domaine IPv6 interconnecté à un domaine IPv4 selon l'invention;
- la figure 2 illustre la structure d'un préfixe d'adresses IPv6 construit selon l'invention;
- la figure 3 présente de façon schématique les étapes du procédé de réception d'un paquet de données en provenance d'un domaine IPv4 dans un domaine IPv6, selon l'invention;
- la figure 4 illustre la structure d'une adresse IPv6 construite à partir d'une adresse IPv4 et d'un port de destination selon l'invention;
- la figure 5 présente de façon schématique les étapes du procédé de transmission d'un paquet de données d'un domaine IPv6 vers une adresse de destination IPv4 selon l'invention;
- la figure 6a présente de façon schématique la structure d'un dispositif de réception en provenance d'un domaine IPv4 dans un domaine IPv6 selon l'invention; et
- la figure 6b présente de façon schématique la structure d'un dispositif de transmission d'un domaine IPv6 vers une adresse de destination IPv4 selon l'invention;

### 7. Description d'un mode de réalisation particulier de l'invention

Le principe général de l'invention repose sur la construction d'une adresse IPv6 à partir d'une adresse IPv4, d'un préfixe opérateur prédéterminé et d'un numéro de port. Une telle construction permet la transformation d'un paquet IPv4 entrant dans un domaine IPv6 et inversement celle d'un paquet IPv6 sortant d'un domaine IPv6 à destination d'un domaine IPv4, sans qu'il soit nécessaire de maintenir une table de correspondance entre les adresses IPv4 et IPv6 dans un noeud d'accès au domaine IPv6.

Pour rappel, les adresses IPv6 sont longues de 16 octets, soit 128 bits, contre 4 octets (32 bits) pour les adresses IPv4. On dispose ainsi d'un nombre potentiel d'adresses extrêmement grand par rapport au nombre d'adresses IPv4. Une adresse IPv6 comporte deux parties:
- la partie de gauche (le préfixe) identifie un sous-réseau du domaine;
- la partie de droite identifie une machine connectée au sous-réseau.

Généralement, les préfixes les plus longs alloués à un sous-réseau sont des préfixes "/64"; c'est-à-dire qu'ils comportent 64 bits pour les identifier. Les 64 bits de droite de l'adresse sont alors utilisés pour identifier une machine particulière appartenant au sous-réseau. Des préfixes de longueurs plus courtes (exemple /56 ou même /48) permettent quant à eux d'identifier des sous-réseaux de plus grande ampleur, comportant souvent eux-mêmes des sous-réseaux /64. Néanmoins, dans le standard IPv6, rien n'interdit d'utiliser des préfixes plus longs que /64 et on peut donc imaginer, par exemple, un préfixe /116 qui identifie un sous-réseau pouvant comporter 4096 machines.

On notera que la seule restriction à des préfixes plus longs que /64 consiste simplement dans le fait que les machines derrière le sous-réseau correspondant ne pourront pas mettre en oeuvre le mécanisme d'auto-configuration décrit dans le document RFC2462. Ce mécanisme permet à une machine connaissant son adresse de niveau 2 (par exemple son adresse Ethernet MAC) de configurer elle-même, sous certaines conditions, les 64 bits de droite de son adresse IPv6, en dérivant son adresse de niveau 2 suivant un algorithme précis. Mais ce mécanisme d'auto-configuration n'est pas obligatoire et on peut préférer d'autres mécanismes comme par exemple celui correspondant au protocole DHCPv6 [RFC3315] qui permet, entre autres, d'obtenir une adresse IPv6 auprès d'un serveur DHCPv6.

Si on s'intéresse maintenant, non plus à une simple machine IPv6, mais à un routeur IPv6 (comme par exemple une passerelle résidentielle IPv6), on sait qu'un tel équipement doit disposer d'un (ou plusieurs) préfixes IPv6 qui représente(nt) le(s) sous-réseau(x) dont il route les paquets. Un routeur IPv6 doit donc être configuré avec un (ou plusieurs) préfixes.

Une extension de DHCPv6 permet à un routeur requérant un ou des préfixes IPv6 (comme par exemple une passerelle résidentielle) de les demander auprès d'un équipement pouvant en déléguer (typiquement un routeur en amont). Cette extension est décrite dans le RFC 3633 (*IPv6 Prefix Options for Dynamic Host Configuration Protocol (DHCP) version 6)* et spécifie une option "Identity Association for Prefix Delegation Option" dans les messages DHCPv6 pour passer le ou les préfixes délégués. Une fois que le routeur requérant s'est vu déléguer un ou des préfixes IPv6, il route tous les paquets IPv6 destinés ou issus de machines dont les adresses s'inscrivent dans le(s) préfixe(s) qu'il gère.

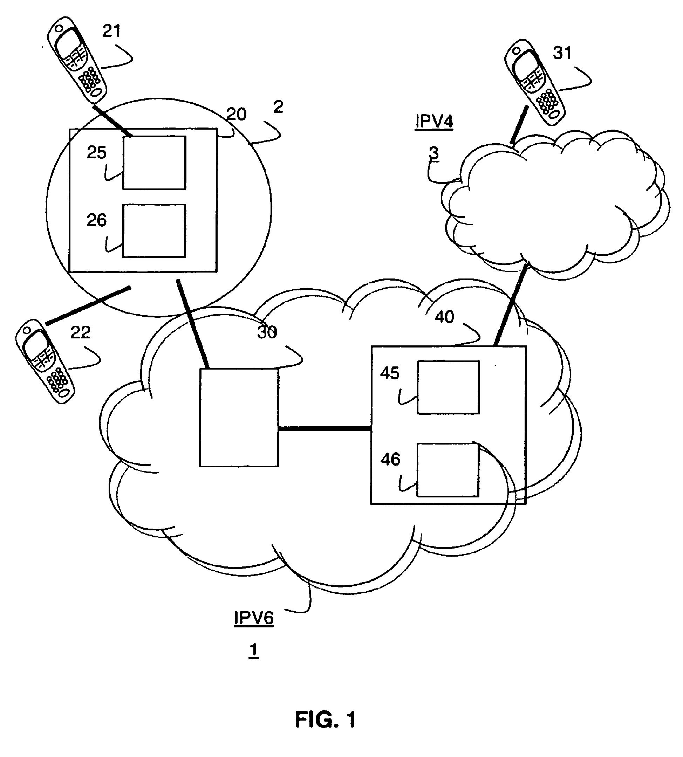

On présente maintenant, en relation avec la figure 1, un domaine IPv6 1 comprenant un noeud d'accès IPv6/IPv4 40 à un domaine IPv4 3 et un routeur d'accès 30, apte à router des paquets de données vers ou en provenance d'une passerelle résidentielle 20 connectée au domaine lPv6 1. Une telle passerelle administre un réseau privé résidentiel 2 auxquels sont connectés les terminaux 21 et 22.

Dans le contexte de l'invention, on considère une passerelle résidentielle dual-stack (DS), c'est-à-dire ayant activé les deux piles protocolaires IPv4 et IPv6. De ce fait, une telle passerelle est en mesure de traiter (en particulier, recevoir et émettre) des paquets de données de type IPv4 ou IPv6.

Les terminaux 21 et 22 peuvent être dual-stack (IPv4 et IPv6), ou mono-version IPv6 (i.e. purement IPv6). Nous verrons dans la suite en quoi l'invention permet une interconnexion d'un domaine IPv6 avec au moins un domaine IPv4 pour des terminaux IPv6.

On considère les cas "hybrides" suivants :
- acheminement d'un paquet de données IPv4 entrant émis par un terminal d'utilisateur du domaine IPv4 3 à destination d'un terminal d'utilisateur 21, 22 du réseau résidentiel 2 de la passerelle 20 connectée au domaine IPv61; et
- acheminement d'un paquet de données IPv4 entrant émis par un terminal d'utilisateur 21, 22 du domaine IPv4 2 privé de la passerelle vers un terminal d'utilisateur du domaine IPv4 3.

Les cas d'une transmission de paquets purement IPv6 ou IPv4 étant connus de l'homme de métier, ils ne seront pas décrits plus en détails.

Pour pouvoir se connecter au domaine ou réseau IPv6, la passerelle résidentielle 20 dispose d'éléments de connectivité IP fournis par le fournisseur de service de connectivité.

On notera toutefois que l'invention ne se limite pas à l'accès au service de connectivité IP (e.g. Internet, Intranet, etc.) par une passerelle résidentielle, mais qu'elle s'applique aussi à des terminaux d'utilisateurs dans d'autres contextes d'accès à Internet ou d'accès à un réseau Intranet. On peut citer par exemple l'accès depuis un réseau mobile, selon lequel un terminal mobile évolué pourrait servir de passerelle, en communicant avec d'autres terminaux de son réseau LAN (via Bluetooth par exemple) ou encore le cas d'un simple terminal mobile.

Selon l'invention, la passerelle résidentielle 20 dispose des éléments de connectivité IP suivants:
- une adresse IPv4 classique appelée dans la suite "@IPv4". Dans le cas où la passerelle héberge dans son réseau résidentiel des terminaux clients purement IPv6, cette adresse IPv4 est dite fictive car elle n'est pas utilisée par la passerelle pour envoyer/recevoir du trafic IP;
- une plage de numéros de ports autorisés appelée ports_pattern/length_of_unvariable;
- un préfixe d'adresses IPv6 construites appelé IPv6_prefix_ports_range; et
- un préfixe d'adresses appelé préfix IPv6 natif IPv6_prefix_native. Ce deuxième préfixe n'est toutefois pas obligatoire. Seul le préfixe IPv6 construit est suffisant.
Les éléments @IPv4, tPv6_prefix_ports_range et tPv6_prefix_native sont des éléments d'information standards dans le cadre habituel des protocoles IPv4 et IPv6.

Selon l'invention, l'élément d'information IPv6 _prefix_ports_range contient intrinsèquement les éléments @IPv4 et ports_pattern/length_of_unvariable.

Dans un mode de réalisation de l'invention, l'adresse IPv4 @IPv4 est une adresse shared@IPv4 partagée par plusieurs passerelles résidentielles du domaine IPv6 1 et la plage de numéros de ports autorisé pour la passerelle résidentielle 20 est une plage de numéros de ports réservés à cette passerelle.

On comprendra que le fait de partager l'adresse publique shared@IPv4 entre plusieurs passerelles résidentielles permet d'économiser le nombre d'adresses IPv4 utilisées et de retarder le phénomène d'épuisement. En outre, son utilisation est justifiée par le besoin d'interconnecter des domaines IPv4 avec d'autres IPv6. Cette interconnexion se fait en général via des adresses de représentation. Si le parc de clients IPv6 est grand, alors les adresses de représentation IPv4 requises est conséquent.

Les différentes passerelles résidentielles qui se partagent la même adresse shared@IPv4 sont identifiées de façon unique par les numéros de ports qu'elles utilisent, puisque chacune d'entre elles bénéficie d'une plage de numéros de ports contigüe, certes restreinte, mais qui lui est réservée.

L'invention propose une interconnexion entre domaines IPv6 et IPv4 qui nécessite l'affectation d'adresses IPv4 pour fonctionner et assurer ainsi une continuité de connectivité entre terminaux hétérogènes (i.e. IPv4 et IPv6) d'une manière transparente.

Un avantage du mode de réalisation de l'invention, selon lequel les adresses IPv4 sont partagées, est donc de faciliter la migration vers l'adressage IPv6 tout en économisant les adresses IPv4. Dans un contexte de transition entre les deux modes d'adressage IPv4, IPv6, une telle économie peut avantageusement permettre d'éviter la pénurie tant que la migration n'est pas terminée. Un autre avantage est d'avoir un retour sur investissement immédiat pour les équipements IPv6, car l'utilisation des capacités IPv6 ne dépend pas du comportement des clients mais de l'opérateur lui-même.

Dans la suite de la description, on considère l'exemple de réalisation selon lequel l'adresse IPv4 affectée à la passerelle 20 est une adresse partagée Shared@IPv4.

En relation avec la figure 1, la passerelle résidentielle 20 est connectée au réseau ou domaine IPv6 de l'opérateur par un routeur d'accès dual-stack (DS) 30. Il s'agit du premier routeur que les paquets de données IPv6 et IPv4 rencontrent lorsqu'ils sortent de la passerelle résidentielle. On notera toutefois que cette configuration n'est donnée qu'à titre d'exemple. De façon alternative, une passerelle résidentielle DS peut en effet s'interconnecter avec un premier routeur d'accès IPv4 et un deuxième routeur IPv6. Dans la suite, on considère le cas d'un routeur d'accès DS 30 tel que celui de la figure 1.

Suivant l'architecture réseau adoptée au niveau du routage IPv6, le routeur d'accès 30 peut annoncer en direction de l'amont du réseau (i.e. vers le réseau 1 du fournisseur de service de connectivité IP) les préfixes IPv6 qu'il route, c'est-à-dire les préfixes IPv6_prefix_ports_range et IPv6 _prefix_native des passerelles résidentielles qu'il dessert.

Le routeur d'accès 30 obtient les préfixes IPv6 des passerelles résidentielles qu'il dessert de façon tout à fait classique dans un environnement réseau IPv6. On peut citer deux méthodes qui sont décrites ci-dessous:
1- il reçoit les annonces de routage IPv6 des passerelles résidentielles qu'il dessert (IPv6_prefix_ports_range et IPv6_prefix_native). A cet effet, chaque passerelle résidentielle annonce ses préfixes vers l'amont (IPv6_prefix_ports_range et IPv6_prefix_native); ou
2- Il obtient les différents IPv6_prefix_ports_range et IPv6_prefix_native par délégation de préfixes comme décrit dans le RFC 3633 (*IPv6 Prefix Options for Dynamic Host Configuration Protocol (DHCP) version 6*).

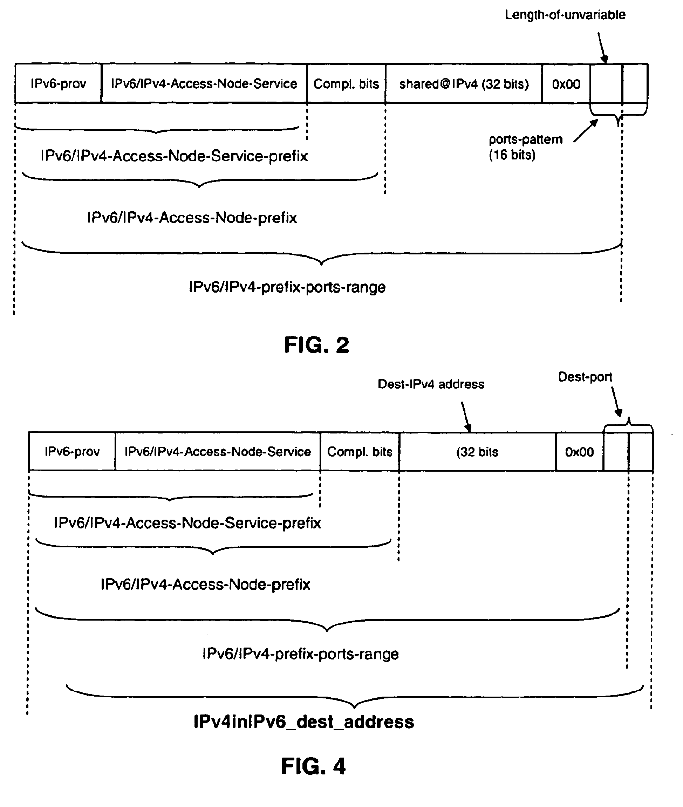

En relation avec la figure 2, on présente maintenant un exemple de constitution d'un préfixe d'adresses IPv6 construites selon l'invention, tel que le préfixe IPv6_prefix _ports_range affecté à la passerelle résidentielle 20.

Ce préfixe IPv6 englobe les bits de l'adresse IPv4 publique Shared_@IPv4 et la plage de numéros de ports autorisés (ports_pattern/length_of_unvariable) pour la passerelle 20, et permet de façon univoque de router le paquet IPv6 entrant jusqu'à la passerelle résidentielle destinatrice. Il s'agit d'un préfixe IPv6 qui est routable dans un réseau IPv6. Il pourrait même être routé dans l'Internet IPv6, si l'on choisissait qu'il soit un préfixe s'inscrivant dans le préfixe de l'opérateur de réseau fournissant la passerelle résidentielle (particulièrement s'il était annoncé dans BGP (Border Gateway Protocol)). Selon l'exemple de la figure 2, ce préfixe comprend de gauche à droite:
- le préfixe IPv6 affecté au noeud d'accès 40: préfixe IPv6/IPv4_Access_Node_prefix;

De façon avantageuse, ce préfixe est choisi de telle sorte qu'il s'inscrive dans le préfixe opérateur IPv6 IPv6-prov affecté au fournisseur de service de connectivité IP par son RIR (Regional Internet Registry) et donc qu'il comporte ce préfixe opérateur dans ses premiers bits :
- les bits IPv6/IPv4_Access_Node_Service identifiant chez l'opérateur le service d'interconnexion IPv6/IPv4 Access_Node selon la présente invention. La séquence composée des bits du préfixe opérateur suivis des bits IPv6/IPv4_Access_Node_Service compose le préfixe IPv6/IPv4_Access_Node_Service_prefix qui identifie le service ;
- des bits complémentaires identifiant un noeud d'accès particulier IPv6/IPv4 Access_Node desservant la passerelle résidentielle.

Pour des raisons de partage de charge (ou Load-balancing), le préfixe IPv6/IPv4_Access_Node_prefix peut n'être pas spécifique à un seul noeud d'accès.
- Les 32 bits de l'adresse Shared_@IPv4 de la passerelle 20 ;
- De façon optionnelle, 8 bits réservés, mis à 0. Cet octet peut servir à faire la distinction entre les différents types de ports (UDP, TCP, SCTP, etc.) Il prendrait la valeur "X" pour le traitement UDP et "Y" pour le traitement "TCP", etc.
- Les 16 bits représentant la plage de numéros de ports autorisés pour la passerelle ou "ports_pattern", avec une partie invariable à gauche dans ces 16 bits (bits de poids le plus fort), de longueur length of_unvariable. On notera que dans le cas où l'adresse IPv4 de la passerelle 20 n'est pas partagée par plusieurs passerelles résidentielles, la plage de numéros de ports autorisés est de taille maximale et identique pour toutes les passerelles.

La longueur du préfixe IPv6_prefix_ports_range est établie comme suit :
128 -16 (longueur d'une adresse IPv6 - adresse du codage d'un port) = 112 bits + length of_unvariable (longueur des bits invariants représentant la plage de ports source autorisés).

On notera que le préfixe IPv6-prefix_ports_range constitué selon l'invention est plus long que les préfixes recommandés par le standard IPv6 pour un déploiement IPv6. Néanmoins, ceci ne l'empêche pas d'être conforme aux standards IPv6.

Le domaine IPv6 1 présenté en relation avec la **figure 1** comprend au moins un noeud d'accès 40 selon l'invention. On notera qu'il peut en comprendre plusieurs autres. Le noeud d'accès 40 IPv6/IPv4_Access_Node est un routeur particulier Dual-Stack (IPv4 et IPv6). Selon un mode de réalisation de l'invention, il comprend des dispositifs d'acheminement d'un paquet de données IPv4 entrant depuis le réseau IPv4 3 à destination du réseau 1 et d'un paquet IPv6 sortant du réseau 2 à destination d'une destination localisée dans le domaine IPv4 3.

Dans le réseau 1, le noeud d'accès 40 IPv6/IPv4_Access_Node est typiquement situé en amont du ou des routeurs d'accès 30 (donc vers le coeur du réseau ou dans un segment d'interconnexion avec des réseaux adjacents), comme représenté sur la **figure 1****.**

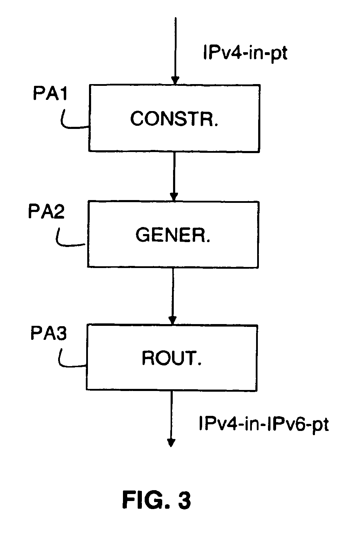

Le procédé de réception d'un paquet de données en provenance d'un domaine IPv4 dans un domaine IPv6 va maintenant être décrit en relation avec la **figure 3****.** Dans l'exemple de la **figure 3****,** on considère un paquet de données IPv4-in-pt entrant dans un domaine IPv6 en provenance d'un domaine IPv4 et destiné à un terminal d'utilisateur du domaine IPv6 1, par exemple le terminal 21. Le terminal se situe derrière la passerelle résidentielle 20 qui dispose d'une adresse IPv4 @IPv4 ou Shared_@IPv4 et d'une plage de ports autorisés ports_pattern/length_of_unvariable.

Le paquet IPv4-in-pt entrant, s'il est destiné au terminal d'utilisateur 21 du réseau résidentielle de la passerelle résidentielle 20, comprend une adresse de destination IPv4 égale à Shared_@IPv4 et un port de destination s'inscrivant dans la plage ports autorisés ports_pattern/length_of_unvariable de la passerelle résidentielle 20.

Comme évoqué précédemment en relation avec la **figure 2****,** l'adresse Shared-@IPv4 et la plage de numéros de ports ports_pattern/lenght of_unvariable se retrouvent dans le préfixe IPv6_prefix_ports_range de la passerelle résidentielle 20.

Le paquet IPv4-in-pt est reçu par le noeud d'accès 40, qui met en oeuvre le procédé de réception selon l'invention. En effet, dans une étape préalable, le fournisseur de connectivité IP a annoncé aux domaines IPv4 avec lesquels il a une interface, les adresses IPv4 affectées à des passerelles résidentielles du domaine 1 à destination desquelles il avait la charge d'acheminer les paquets IPv4. Il a fait cette annonce, soit par l'intermédiaire du noeud d'accès 40 lui-même ou d'un ASBR (Autonomous System Border Router) selon une technique connue de l'homme de métier.

Le paquet IPv4-in-pt comprend une adresse de destination @IPv4 ou shared@IPv4 gérée par le noeud d'accès 40 et un port de destination dest-port. Selon l'invention, le procédé de réception comprend une étape PA1 de construction d'une adresse de destination IPv6 IPv4inIPv6_dest_address par concaténation d'un préfixe IPv6/IPv4_Access_Node_prefix du noeud d'accès 40, de ladite adresse de destination IPv4 shared-@IPv4 et du numéro de port de destination dest-port, comme décrit en relation avec la figure 4. Le numéro de port de destination dest-port est inséré dans la partie droite de l'adresse de destination IPv6 construite. Le procédé de réception selon l'invention insère donc à la fois les 32 bits de l'adresse IPv4 de destination du paquet IPv4 reçu et les 16 bits du port de destination dest-port pour constituer une adresse IPv6 de destination construite que nous appelons IPv4inIPv6_dest_address.

Dans une étape PA2, le dispositif de réception selon l'invention génère un paquet de données IPv6 IPv4inIPv6-pt à partir de l'adresse de destination IPv6 IPv4inIPv6_dest_address construite et du paquet de données IPv4 reçu. Un mode de réalisation consiste à encapsuler le paquet IPv4 reçu dans un paquet IPv6:
- dont l'adresse source IPv6 est une des adresses IPv6 dont dispose l'IPv6/IPv4_Access_Node 40 en propre (pour une de ses interfaces);
- et dont l'adresse de destination IPv6 est l'adresse IPv4inIPv6_dest_address.

Un autre mode de réalisation consiste à traduire le paquet IPv4 IPv4-in-pt reçu en un paquet IPv6 auquel on associe l'adresse IPv6 construite après avoir préalablement extrait du paquet IPv4 reçu son adresse IPv4 de destination, son port de destination, son adresse IPv4 source et son port source. On notera toutefois que dans le cas où le destinataire final du paquet de données est un terminal IPv4 21, 22 du réseau résidentiel 2 de la passerelle 20, seule l'encapsulation est valide. La traduction s'applique au cas où le paquet de données est destiné à un terminal IPv6 du réseau résidentiel 2.

En PA3, le paquet de données IPv6 IPv4inIPv6-pt généré à l'aide de l'adresse de destination IPv6 construite est routé dans le domaine IPv6 1. Le paquet IPv4inIPv6-pt passe donc dans le coeur de routage IPv6 du noeud d'accès 40 I Pv6/I Pv4_Access_Node.

Par construction, son adresse de destination IPv4inIPv6_dest_address s'inscrit dans le préfixe IPv6_prefix_ports_range de la passerelle résidentielle .20. Le paquet IPv4inIPv6-pt est routé vers l'interface du noeud d'accès IPv6/IPv4_Access_Node 40 qui dessert la route IPv6 correspondante vers de la passerelle résidentielle 20.

On notera que si l'adresse de destination IPv4inIPv6_dest_address ne s'inscrivait dans aucun préfixe IPv6_prefix_ports_range (ou aucun préfixe englobant), le paquet serait détruit à un moment à un autre sur la route, car il ne pourrait être routé vers aucun préfixe IPv6_prefix_ports_range et donc vers aucune passerelle résidentielle.

Si l'adresse de destination IPv4inIPv6_dest_address s'inscrit bien dans le préfixe IPv6_prefix_ports_range, le paquet IPv4inIPv6-pt parvient au routeur_d'acces_dual_stack 30 desservant la passerelle résidentielle 20 qui héberge le terminal d'utilisateur 21 dans son réseau résidentielle 2. Il est routé par le routeur_d'acces_dual_stack 30 vers la passerelle résidentielle, lequel connaît la route vers le préfixe IPv6_prefix_ports_range.

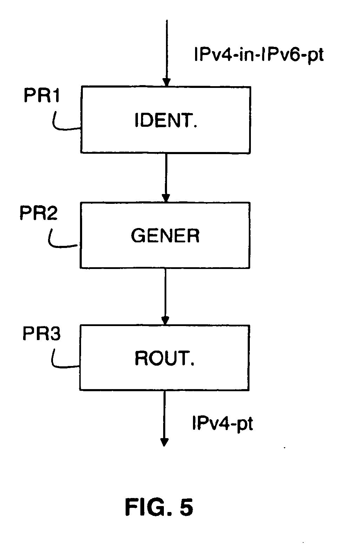

Selon un mode de réalisation de l'invention, la passerelle résidentielle 20 comprend un dispositif mettant en oeuvre le procédé de transmission du paquet de données IPv4inIPv6-pt selon l'invention. Un tel procédé va maintenant être décrit en relation avec la **figure 5****.**

Lorsque le paquet IPv4inIPv6-pt parvient à la passerelle résidentielle 20, celle-ci identifie de façon connue, à l'aide de l'en-tête du paquet reçu (en particulier les bits caractérisant le préfixe IPv6/IPv4-Access-Node-Service-prefix), s'il s'agit d'un paquet IPv6 classique ou s'il s'agit d'un paquet IPv6 encapsulant un paquet IPv4.

S'il s'agit d'un paquet IPv6 encapsulant un paquet IPv4, le procédé de transmission comprend une première étape PR1 de génération d'un paquet IPv4 à partir du paquet IPv6 reçu. Il peut s'agit d'une dé-encapsulation du paquet IPv4 contenu dans le paquet IPv4inIPv6-pt. Cette dé-encapsulation permet d'obtenir le paquet IPv4-in-pt initialement émis par le terminal émetteur dans le domaine IPv4 3 et, en particulier, son numéro de port de destination dest-port. Dans ce cas, le procédé comprend une étape PR2 de vérification de l'appartenance de ce numéro de port de destination dest-port à la plage de numéros de ports autorisés ports_pattern/length_of_unvariable pour la passerelle 20. On notera qu'une telle vérification présente un intérêt particulier dans le cas où l'adresse IPv4 de la passerelle résidentielle est une adresse partagée shared@IPv4 et où la plage de numéros de ports réservés à la passerelle 20 est restreinte.

Si cette vérification est positive, une étape PR3 de routage du paquet de données IPv4-in-pt vers le terminal d'utilisateur 21 est mise en oeuvre de façon connue et classique.

On notera qu'un dispositif de traduction d'adresses ou NAT interne est très souvent mis en place dans une telle passerelle résidentielle lorsqu'elle dessert plusieurs terminaux d'utilisateurs 21, 22 dans son réseau résidentiel. Le paquet IPv4-in-pt reçu de l'extérieur est alors traité par le NAT interne de la passerelle résidentielle 20 et remis vers le terminal destinataire final 21 dans le réseau résidentielle.

On comprend que le cas d'un paquet de données encapsulé représente une première phase de migration vers l'adressage IPv6. En effet, il permet l'acheminement des paquets IPv4 selon le protocole IPv6 dans le domaine IPv6 1, mais après dé-encapsulation, les paquets IPv4 sont réceptionnés et traités selon le protocole IPv4, ce qui nécessite que la passerelle résidentielle 20 soit capable de gérer une adresse IPv4.

S'il ne s'agit pas d'un paquet IPv6 encapsulant un paquet IPv4, mais d'un paquet IPv6 obtenu par traduction du paquet de données IPv4-in-pt, la passerelle résidentielle 20 route le paquet IPv6 de façon classique vers le terminal destinataire. On comprend que ce dernier cas représente une deuxième phase de migration, qui n'impose plus au terminal d'être dual-stack.

Selon un aspect de l'invention, une étape de remplacement d'adresse IPv6 peut être mise en oeuvre par la passerelle qui consiste à remplacer l'adresse de destination construite IPv4-in-IPv6-dest-address par une adresse native IPv6_address_native-UE du terminal 21. Ceci présente un intérêt dans le cas où le paquet de données IPv4-in-pt fait partie d'une réponse à un paquet de données émis préalablement par le terminal destinataire 21 avec son adresse source IPv6 native, et pour lequel la passerelle avait en effet avantageusement stocké cette adresse native dans sa table de NAT avant sa transmission. A ce moment-là, elle avait remplacé cette adresse native par l'adresse construite du terminal 21, afin de permettre au noeud d'accès 40 d'en extraire une adresse source IPv4 lors de la transformation du paquet IPv6 sortant en un paquet IPv4.

On considère maintenant le mode d'établissement d'une communication sortante vers un destinataire IPv4 qui peut, par exemple, être un serveur Web IPv4 localisé dans le réseau Internet. Un terminal d'utilisateur du réseau résidentiel 2, par exemple le PC IPv6 22 de la passerelle 20, émet un paquet de données à destination de ce correspondant IPv4 3. Dans ce cas, l'application tournant sur le PC est un browser IPv6. Le terminal d'utilisateur source 22 peut être DS ou purement IPv6.

On considère le cas où le terminal 22 émet des paquets de données en IPv4.

La passerelle résidentielle 20, sur réception du paquet de données IPv4, met en oeuvre le procédé de réception d'un paquet de données selon l'invention, qui vient d'être décrit en relation avec la **figure 3****.** Elle construit donc des adresses IPv6 source et destination et génère un paquet de données IPv6 en utilisant le mécanisme décrit en relation avec la **figure 4****.** On notera que la constitution d'une adresse source IPv6 suit les mêmes règles que celle d'une adresse de destination IPv6. Elle extrait en outre son numéro de port source et le remplace, si besoin, par un numéro de port appartenant à la plage de numéros de ports autorisés qui lui a été affectée. Elle route ensuite le paquet IPv6 ainsi construit vers le routeur 30.

Avant d'être routé vers son destinataire final, le paquet IPv4 doit alors être extrait du paquet IPv6 par un équipement particulier du réseau chargé de l'opération inverse, par exemple le noeud d'accès 40, qui met alors en oeuvre le procédé de transmission d'un paquet de données déjà décrit en relation avec la **figure 5****.**

Avec l'invention, une passerelle résidentielle ne peut être connectée qu'en IPv6 au domaine 1 et le routeur d'accès 30 routeur_d'acces_dual_stack ne peut être qu'IPv6 (routeur_d'acces_IPv6).

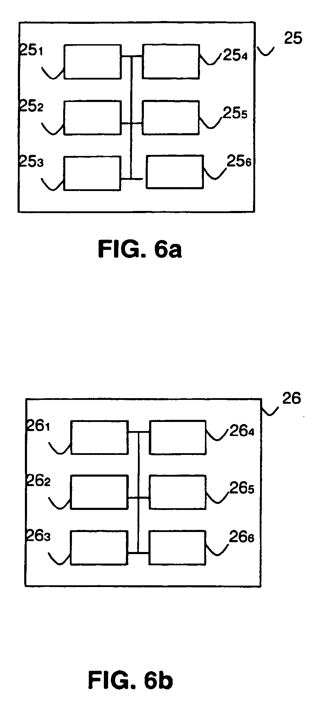

Dans l'exemple décrit en relation avec la **figure 1****,** la passerelle résidentielle 20 et le noeud d'accès 40 selon l'invention comportent un dispositif 25 de réception d'un paquet de données, qui va être maintenant décrit en relation avec la figure 6a. Il comprend les éléments matériels que l'on retrouve classiquement dans un ordinateur conventionnel ou un routeur spécialisé, à savoir un processeur 25₁, une mémoire vive de type RAM 25₂, une mémoire morte de type ROM 25₃ et des moyens 25₄ de télécommunications avec le réseau 1.

Conformément à l'invention, le dispositif 25 comporte une mémoire 25₅ comprenant une base de données dans laquelle est stockée une table de traduction d'adresses ou NAT entre le domaine 1 et son réseau résidentiel 3.

On notera que cette mémoire peut aussi bien être externe au dispositif 25 pourvu qu'il puisse y accéder.

La mémoire morte 25₅ constitue un support d'enregistrement conforme à l'invention. Ce support mémorise le programme d'ordinateur conforme à l'invention. Ce programme comporte des instructions pour l'exécution des étapes du procédé de réception d'un paquet de données conforme à l'invention qui vient d'être décrit en référence à la figure **3****.**

La passerelle résidentielle 20 et le noeud d'accès 40 selon l'invention comprennent en outre un dispositif 26 de transmission d'un paquet sortant selon l'invention, qui va maintenant être décrit en relation avec la figure 6b. Il comprend les éléments matériels que l'on retrouve classiquement dans un ordinateur conventionnel ou un routeur spécialisé, à savoir un processeur 26₁, une mémoire vive de type RAM 26₂, une mémoire morte de type ROM 26₃ et des moyens 26₄ de télécommunications avec le réseau 1.

Conformément à l'invention, le dispositif 26 comporte une mémoire 26₅ qui peut comprendre, pour la passerelle résidentielle, une base de données dans laquelle est stockée une table de traduction d'adresses ou NAT entre le domaine 1 et son réseau résidentiel 3.

On notera que cette mémoire peut aussi bien être externe au dispositif 26 pourvu qu'il puisse y accéder.

La mémoire morte 26₅ constitue un support d'enregistrement conforme à l'invention. Ce support mémorise le programme d'ordinateur conforme à l'invention. Ce programme comporte des instructions pour l'exécution des étapes du procédé de transmission d'un paquet de données conforme à l'invention qui vient d'être décrit en référence à la figure **5****.**

On notera que les dispositifs 25, 26 mettant en oeuvre respectivement les procédés de réception et de transmission qui viennent d'être décrit pour la passerelle résidentielle 20 et le noeud d'accès 40 peuvent être réunis en un seul dispositif apte à implémenter les deux procédés de réception et transmission selon l'invention.

On notera également que ces dispositifs peuvent aussi bien être inclus dans un terminal d'utilisateur connecté directement au réseau 1 du fournisseur de service de connectivité.

On notera que l'invention ne se limite pas à l'exemple de la figure 1, les dispositifs 25 et 26 pouvant très bien être implémentés sur un ordinateur ou tout autre équipement du réseau 1.

En résumé, l'invention permet une première phase de migration des services de connectivité IP vers IPv6 à l'aide de mécanismes d'acheminement des paquets qui prennent en compte les faits suivants :
- Les opérateurs de services souffrent d'un problème d'épuisement d'adresses IPv4;
- La migration finale vers IPv6 devrait prendre plusieurs années (10 ans minimum).

Ceci est dû principalement au nombre important des acteurs à convaincre pour un passage vers IPv6, le nombre important des systèmes autonomes (AS pour Autonomous System) et de la diversité des mécanismes d'interconnexion. De plus, le problème des adresses ne concerne à priori que les opérateurs, les clients n'ayant aucune motivation pour modifier l'architecture de leurs réseaux locaux, en particulier leurs serveurs FTP, HTTP, etc. vers IPv6. Les opérateurs doivent s'attendre à un long travail d'accompagnement de leurs clients pour le passage vers IPv6 ;
- La simple migration vers IPv6 d'un domaine donné ne résout pas le problème de la connectivité globale, à savoir de joindre n'importe quelle machine distante présente sur Internet. Une interconnexion avec le monde IPv4 doit donc être mise en place.
- Une solution à base de NAT-PT avec état n'est pas recommandée. Le service fourni en serait dégradé, en particulier parce que les services à valeur ajoutée liés au « port forwarding » configuré par les clients ne fonctionneront pas.

Les mécanismes d'acheminement des paquets selon l'invention permettent de promouvoir l'utilisation du protocole IPv6 de la façon suivante :
- activation d'IPv6 et mise en place d'une solution permettant de promouvoir le trafic IPv6 basée sur une fonction d'interconnexion placée dans le réseau, qui est sans état. La solution de l'invention implique l'utilisation de terminaux d'utilisateurs et passerelles résidentielles Dual-Stack (DS, c'est-à-dire ayant activé les deux piles protocolaires IPv4 et IPv6). De ce fait ces équipements sont en mesure de traiter (recevoir et émettre) des messages de type IPv4 ou IPv6.

De façon avantageuse, cette étape propose d'affecter une même adresse lPv4 à plusieurs passerelles, ce qui permet en outre d'économiser les adresses IPv4. Pour différencier les passerelles résidentielles partageant la même adresse IPv4:
- une plage de ports source autorisés est affectée au niveau de chaque passerelle (ou autres équipements dans des contextes autres que l'accès Internet résidentiel) pour les communications sortantes,
- un préfixe IPv6 particulier IPv6_prefix_ports_range (englobant l'adresse IPv4 et la plage de ports) est mis en place dans la chaîne de routage IPv6 entrante vers la passerelle résidentielle.

Pour les communications IPv4 entrantes, un équipement d'interconnexion IPv4/IPv6 ou noeud d'accès est inséré dans le chemin via des annonces dédiées dans l'IGP (Interior Gateway Protocol) ou BGP (Border Gateway Protocol). A la réception d'un paquet IPv4, il construit une adresse IPv6 de destination sur la base des informations IPv4 destination (adresse et port) et encapsule le paquet IPv4 reçu dans un paquet IPv6 ayant cette adresse de destination. Si le paquet IPv4 est destiné à une passerelle résidentielle X particulière, l'adresse IPv6 construite se trouve dans les faits englobée dans le IPv6_prefix_ports_range de la passerelle résidentielle X. Celle-ci recevra le paquet IPv6 encapsulant le paquet IPv4 fabriqué par le noeud d'accès. A sa réception, elle dé-encapsulera ce paquet pour disposer du paquet IPv4 contenu et le router normalement dans son LAN, vers l'équipement concerné.

Pour les communications sortantes, les terminaux peuvent utiliser leur adresse IPv4 partagée ou leur adresses IPv6 (native ou construite). Si l'adresse IPv4 est utilisée, alors la passerelle résidentielle contraint le numéro de port source de telle sorte à s'inscrire dans la plage autorisée. Le paquet est routé en IPv4 normalement jusqu'à sa destination finale. Si la machine distante génère une réponse à ce paquer, alors le paquet de réponse généré est intercepté par le noeud d'accès (grâce aux annonces de routage IGP/BGP) qui procède au traitement selon l'invention.

## Revendications

1. Procédé de réception d'un paquet de données en provenance d'un domaine IPv4 (3) dans un domaine IPv6 (1), ledit paquet de données comprenant une adresse de destination IPv4, un numéro de port de destination, ledit procédé comprenant les étapes suivantes :
- construction (PA1) d'une adresse de destination IPv6 par concaténation d'un préfixe opérateur, de ladite adresse IPv4 et du numéro de port de destination,
- génération (PA2) d'un paquet de données IPv6 à partir de l'adresse de destination IPv6 construite, et du paquet de données IPv4 reçu; et
- routage (PA3) du paquet de données IPv6 généré dans le domaine IPv6, à l'aide de l'adresse de destination IPv6 construite, ladite adresse ainsi construite appartenant à une plage d'adresses IPv6 routable vers un équipement d'interconnexion du domaine IPv6 avec l'adresse de destination IPv4.

2. Procédé de transmission d'un paquet de données d'un domaine IPv6 (1) vers une adresse de destination d'un domaine IPv4 (3), ledit paquet comprenant une adresse de destination IPv6 du paquet construite par concaténation d'un préfixe opérateur, de l'adresse de destination IPv4 et d'un numéro de port de destination, ledit procédé mettant en oeuvre, sur réception du paquet de données, les étapes suivantes :
- extraction (PR1) de l'adresse de destination IPv4 et du numéro de port de destination de l'adresse de destination IPv6,
- génération (PR2) d'un paquet de données IPv4 à partir du paquet de données IPv6, ledit paquet comprenant ladite adresse de destination IPv4, et ledit numéro de port de destination, et
- routage (PR3) du paquet de données IPv4 vers sa destination IPv4.

3. Dispositif de réception d'un paquet de données en provenance d'un domaine IPv4 (3) dans un domaine IPv6 (1), ledit paquet de données comprenant une adresse de destination IPv4 et un numéro de port de destination IPv4, ledit dispositif comprenant des moyens de :
- construction d'une adresse de destination IPv6 par concaténation d'un préfixe opérateur, de ladite adresse IPv4 et du numéro de port de destination,
- génération d'un paquet de données IPv6 à partir de l'adresse de destination IPv6 construite et du paquet de données IPv4 reçu; et
- routage du paquet de données IPv6 généré dans le domaine IPv6, à l'aide de l'adresse de destination IPv6 construite, ladite adresse ainsi construite appartenant à une plage d'adresses IPv6 routable vers un équipement d'interconnexion du domaine IPv6 avec l'adresse de destination IPv4.

4. Dispositif de transmission d'un paquet de données d'un domaine IPv6 (1) vers un domaine IPv4 (3), ledit paquet comprenant une adresse de destination IPv6 du paquet construite par concaténation d'un préfixe opérateur, de l'adresse de destination IPv4 et d'un numéro de port de destination, ledit dispositif comprenant des moyens de, sur réception du paquet de données :
- extraction de l'adresse de destination IPv4 et du numéro de port de destination de l'adresse de destination IPv6,
- génération d'un paquet de données IPv4 à partir du paquet de données kkIPv6, ledit paquet comprenant ladite adresse de destination IPv4 et ledit numéro de port de destination, et
- routage du paquet de données IPv4 vers sa destination IPv4.

5. Equipement d'accès à un domaine IPv6 (1) comprenant une interface avec au moins un domaine IPv4 (3), **caractérisé en ce qu'**il comprend :
- un dispositif de réception d'un paquet de données en provenance d'un domaine IPv4 dans le domaine IPv6 selon la revendication 3; et
- un dispositif de transmission d'un paquet de données d'un domaine IPv6 vers un domaine IPv4 selon la revendication 4.

6. Equipement d'accès à un domaine IPv6 selon la revendication 5, le domaine IPv4 étant un réseau public, ledit équipement comprenant des premiers moyens d'annonce au domaine IPv4 des adresses IPv4 d'équipements réseaux connectés au domaine IPv6 et des deuxièmes moyens d'annonce dans le domaine IPv6 d'adresses IPv6 construites à partir d'adresses IPv4 du domaine IPv4.

7. Equipement d'accès à un domaine IPv6 selon la revendication 5, , le domaine IPv4 étant un réseau privé, l'équipement d'accès comprenant des moyens lui permettant de fonctionner comme une passerelle résidentielle apte à connecter des terminaux d'utilisateurs du réseau privé au domaine IPv6.

8. Equipement d'accès à un domaine IPv6 selon la revendication 7, comprenant des moyens d'obtention d'une adresse IPv4, d'une plage de numéros de ports et d'une plage d'adresses IPv6 autorisées, ladite plage d'adresses IPv6 étant construite par concaténation d'un préfixe opérateur, de ladite adresse IPv4 et de la plage de numéros de ports IPv4 autorisés;

9. Produit programme d'ordinateur téléchargeable depuis un réseau de communication et/ou stocké sur un support lisible par ordinateur et/ou exécutable par un microprocesseur, **caractérisé en ce qu'**il compren des instructions de code de programme pour l'exécution du procédé de réception d'un paquet de données dans un domaine IPv6 (1) en provenance d'un domaine IPv4 (3) selon la revendication 1.

10. Produit programme d'ordinateur téléchargeable depuis un réseau de communication et/ou stocké sur un support lisible par ordinateur et/ou exécutable par un microprocesseur, **caractérisé en ce qu'**il compren des instructions de code de programme pour l'exécution du procédé de transmission d'un paquet de données d'un domaine IPv6 vers une adresse de destination d'un domaine IPv4 selon la revendication 2.

## Claims

1. Method for receiving a data packet from an IPv4 domain (3) in an IPv6 domain (1), said data packet comprising an IPv4 destination address, a destination port number, said method comprising the following steps:
- constructing (PA1) an IPv6 destination address by concatenating an operator prefix, said IPv4 address and the destination port number,
- generating (PA2) an IPv6 data packet from the constructed IPv6 destination address, and from the received IPv4 data packet; and
- routing (PA3) the generated IPv6 data packet in the IPv6 domain, using the constructed IPv6 destination address, said duly constructed address belonging to a range of IPv6 addresses that can be routed to an interconnection element of the IPv6 domain with the IPv4 destination address.

2. Method for transmitting a data packet from an IPv6 domain (1) to a destination address of an IPv4 domain (3), said packet comprising an IPv6 destination address of the packet constructed by concatenation of an operator prefix, the IPv4 destination address and a destination port number, said method implementing, on reception of the data packet, the following steps:
- extracting (PR1) the IPv4 destination address and the destination port number of the IPv6 destination address,
- generating (PR2) an IPv4 data packet from the IPv6 data packet, said packet comprising said IPv4 destination address and said destination port number,
and
- routing (PR3) the IPv4 data packet to its IPv4 destination.

3. Device for receiving a data packet from an IPv4 domain (3) in an IPv6 domain (1), said data packet comprising an IPv4 destination address and an IPv4 destination port number, said device comprising means for:
- constructing an IPv6 destination address by concatenating an operator prefix, said IPv4 address and the destination port number,
- generating an IPv6 data packet from the constructed IPv6 destination address and from the received IPv4 data packet; and
- routing the generated IPv6 data packet in the IPv6 domain, using the constructed IPv6 destination address, said duly constructed address belonging to a range of IPv6 addresses that can be routed to an interconnection element of the IPv6 domain with the IPv4 destination address.

4. Device for transmitting a data packet from an IPv6 domain (1) to an IPv4 domain (3), said packet comprising an IPv6 destination address of the packet constructed by concatenation of an operator prefix, the IPv4 destination address and a destination port number, said device comprising means for, on reception of the data packet:
- extracting the IPv4 destination address and the destination port number of the IPv6 destination address,
- generating an IPv4 data packet from the IPv6 data packet, said packet comprising said IPv4 destination address and said destination port number, and
- routing the IPv4 data packet to its IPv4 destination.

5. Access element for accessing an IPv6 domain (1) comprising an interface with at least one IPv4 domain (3), **characterized in that** it comprises:
- a device for receiving a data packet from an IPv4 domain in the IPv6 domain according to Claim 3; and
- a device for transmitting a data packet of an IPv6 domain to an IPv4 domain according to Claim 4.

6. Access element for accessing an IPv6 domain according to Claim 5, the IPv4 domain being a public network, said element comprising first means for announcing to the IPv4 domain the IPv4 addresses of network elements connected to the IPv6 domain and second means for announcing in the IPv6 domain IPv6 addresses constructed from IPv4 addresses of the IPv4 domain.

7. Access element for accessing an IPv6 domain according to Claim 5, the IPv4 domain being a private network, the access element comprising means enabling it to operate as a residential gateway suitable for connecting user terminals of the private network to the IPv6 domain.

8. Access element for accessing an IPv6 domain according to Claim 7, comprising means for obtaining an IPv4 address, a range of port numbers and a range of authorized IPv6 addresses, said range of IPv6 addresses being constructed by concatenation of an operator prefix, said IPv4 address and the range of authorized IPv4 port numbers.

9. Computer program product that can be downloaded from a communication network and/or stored on a computer-readable medium and/or that can be executed by a microprocessor, **characterized in that** it comprises program code instructions for executing the method for receiving a data packet in an IPv6 domain (1) from an IPv4 domain (3) according to Claim 1.

10. Computer program product that can be downloaded from a communication network and/or stored on a computer-readable medium and/or that can be executed by a microprocessor, **characterized in that** it comprises program code instructions for executing the method for transmitting a data packet from an IPv6 domain to a destination address of an IPv4 domain according to Claim 2.

## Patentansprüche

1. Verfahren zum Empfang eines von einer IPv4-Domäne (3) kommenden Datenpakets in einer IPv6-Domäne (1), wobei das Datenpaket eine IPv4-Zieladresse und eine Zielportnummer enthält, wobei das Verfahren die folgenden Schritte enthält:
- Erstellen (PA1) einer IPv6-Zieladresse durch Verkettung eines Betreiber-Präfix, der IPv4-Adresse und der Zielportnummer,
- Erzeugen (PA2) eines IPv6-Datenpakets ausgehend von der erstellten IPv6-Zieladresse und dem empfangenen IPv4-Datenpaket; und
- Routen (PA3) des erzeugten IPv6-Datenpakets in der IPv6-Domäne mit Hilfe der erstellten IPv6-Zieladresse, wobei die so erstellte Adresse zu einem IPv6-Adressenbereich gehört, der zu einer Verbindungsausstattung der IPv6-Domäne mit der IPv4-Zieladresse gehört.

2. Verfahren zur Übertragung eines Datenpakets von einer IPv6-Domäne (1) zu einer Zieladresse einer IPv4-Domäne (3), wobei das Paket eine IPv6-Zieladresse des Pakets enthält, die durch Verkettung eines Betreiber-Präfix, der IPv4-Zieladresse und einer Zielportnummer erstellt wird, wobei das Verfahren bei Empfang des Datenpakets die folgenden Schritte durchführt:
- Entnehmen (PR1) der IPv4-Zieladresse und der Zielportnummer der IPv6-Zieladresse,
- Erzeugen (PR2) eines IPv4-Datenpakets ausgehend vom IPv6-Datenpaket, wobei das Paket die IPv4-Zieladresse und die Zielportnummer enthält, und
- Routen (PR3) des IPv4-Datenpakets zu seinem IPv4-Ziel.

3. Vorrichtung zum Empfang eines von einer IPv4-Domäne (3) stammenden Datenpakets in einer IPv6-Domäne (1), wobei das Datenpaket eine IPv4-Zieladresse und eine IPv4-Zielportnummer enthält, wobei die Vorrichtung Einrichtungen enthält zum:
- Erstellen einer IPv6-Zieladresse durch Verkettung eines Betreiber-Präfix, der IPv4-Adresse und der Zielportnummer,
- Erzeugen eines IPv6-Datenpakets ausgehend von der erstellten IPv6-Zieladresse und dem empfangenen IPv4-Datenpaket; und
- Routen des in der IPv6-Domäne erzeugten IPv6-Datenpakets mit Hilfe der erstellten IPv6-Zieladresse, wobei die so erstellte Adresse zu einem IPv6-Adressenbereich gehört, der zu einer Verbindungsausstattung der IPv6-Domäne mit der IPv4-Zieladresse gehört.

4. Vorrichtung zur Übertragung eines Datenpakets von einer IPv6-Domäne (1) zu einer IPv4-Domäne (3), wobei das Paket eine IPv6-Zieladresse des Pakets enthält, die durch Verkettung eines Betreiber-Präfix, der IPv4-Zieladresse und einer Zielportnummer erstellt wird, wobei die Vorrichtung Einrichtungen zum, bei Empfang des Datenpakets:
- Entnehmen der IPv4-Zieladresse und der Zielportnummer der IPv6-Zieladresse,
- Erzeugen eines IPv4-Datenpakets ausgehend von dem IPv6-Datenpaket, wobei das Paket die IPv4-Zieladresse und die Zielportnummer enthält, und
- Routen des IPv4-Datenpakets zu seinem IPv4-Ziel.

5. Zugangsausstattung zu einer IPv6-Domäne (1), die eine Schnittstelle mit mindestens einer IPv4-Domäne (3) enthält, **dadurch gekennzeichnet, dass** sie enthält:
- eine Vorrichtung zum Empfang eines von einer IPv4-Domäne kommenden Datenpakets in der IPv6-Domäne nach Anspruch 3; und
- eine Vorrichtung zur Übertragung eines Datenpakets von einer IPv6-Domäne zu einer IPv4-Domäne nach Anspruch 4.

6. Zugangsausstattung zu einer IPv6-Domäne nach Anspruch 5, wobei die IPv4-Domäne ein öffentliches Netz ist, wobei die Ausstattung erste Einrichtungen zur Ankündigung an die IPv4-Domäne der IPv4-Adressen von mit der IPv6-Domäne verbundenen Netzausstattungen und zweite Einrichtungen zur Ankündigung in der IPv6-Domäne von IPv6-Adressen enthält, die ausgehend von IPv4-Adressen der IPv4-Domäne erstellt werden.

7. Zugangsausstattung zu einer IPv6-Domäne nach Anspruch 5, wobei die IPv4-Domäne ein privates Netz ist, wobei die Zugangsausstattung Einrichtungen enthält, die es ihr erlauben, wie ein privates Gateway zu arbeiten, das Benutzer-Endgeräte des privaten Netzes mit der IPv6-Domäne verbinden kann.

8. Zugangsausstattung zu einer IPv6-Domäne nach Anspruch 7, die Einrichtungen zum Erhalt einer IPv4-Adresse, eines Bereichs von Portnummern und eines Bereichs von erlaubten IPv6-Adressen enthält, wobei der Bereich von IPv6-Adressen durch Verkettung eines Betreiber-Präfix, der IPv4-Adresse und des Bereichs von erlaubten IPv4-Portnummern erstellt wird.

9. Computerprogrammprodukt, das von einem Kommunikationsnetz heruntergeladen werden kann und/oder auf einem computerlesbaren Träger gespeichert ist und/oder von einem Mikroprozessor ausgeführt werden kann, **dadurch gekennzeichnet, dass** es Programmcodeanweisungen zur Ausführung des Verfahrens zum Empfang eines von einer IPv4-Domäne (3) kommenden Datenpakets in einer IPv6-Domäne (1) nach Anspruch 1 enthält.

10. Computerprogrammprodukt, das von einem Kommunikationsnetz heruntergeladen werden kann und/oder auf einem computerlesbaren Träger gespeichert ist und/oder von einem Mikroprozessor ausgeführt werden kann, **dadurch gekennzeichnet, dass** es Programmcodeanweisungen zur Ausführung des Verfahrens zur Übertragung eines Datenpakets von einer IPv6-Domäne an eine Zieladresse einer IPv4-Domäne nach Anspruch 2 enthält.
